# FASCICULE DE BREVET EUROPEEN

(11) **EP 3 985 446 B1**
(45) Date de publication et mention de la délivrance du brevet: **24.05.2023**
(21) Numéro de dépôt: 20201841.2
(22) Date de dépôt: 14.10.2020
(51) Int. Cl.: G04B 5/00, G04D 7/00

(54) **DISPOSITIF DE DETERMINATION DE POSITION D'AFFICHEUR D'HORLOGERIE**
VORRICHTUNG ZUR POSITIONSBESTIMMUNG EINER UHRANZEIGE
DEVICE FOR DETERMINING THE POSITION OF A CLOCK DISPLAY

(43) Date de publication de la demande: 20.04.2022
(73) Titulaire: The Swatch Group Research and Development Ltd, 2074 Marin (CH)
(72) Inventeur: FAVRE, Jérôme, 2000 Neuchâtel (CH); KALBERMATTER, Stefan, 2540 Grenchen (CH); FARAH, Hicham, 2605 Sonceboz-Sombeval (CH)
(74) Mandataire: ICB SA

(56) Documents cités:
- EP-A1- 1 553 469
- EP-A1- 3 211 491
- EP-A1- 3 579 061
- WO-A1-2018/007978

## Description

### Domaine de l'invention

L'invention concerne un dispositif de détermination de position d'un afficheur d'horlogerie, pour déterminer la position instantanée d'au moins un afficheur d'une pièce d'horlogerie, comportant des moyens de pilotage coordonnant une base de temps et des moyens de reconnaissance de forme et des moyens d'acquisition optique, que comporte ledit dispositif, agencés pour identifier ledit au moins un afficheur et suivre sa course pour coder sa position instantanée par rapport à un repère fixe, et commandant des saisies de sa position à des instants distincts pour déterminer sa mobilité par rapport audit repère fixe.

L'invention concerne encore un remontoir automatique pour montre, comportant au moins un tel dispositif de détermination de la position d'un tel afficheur d'horlogerie.

L'invention concerne encore un appareil de réglage de marche et/ou d'état d'une montre, comportant un tel remontoir automatique, et/ou au moins un tel dispositif de détermination de la position d'un afficheur d'horlogerie.

L'invention concerne le domaine des appareillages de maintenance des pièces d'horlogerie, notamment des montres, et en particulier le domaine des remontoirs automatiques.

### Arrière-plan de l'invention

Le document EP3572887 au nom de THE SWATCH GROUP RESEARCH & DEVELOPMENT Ltd décrit un remontoir intelligent, mettant en oeuvre un système de vision tel qu'une caméra, pour l'observation d'au moins une montre pendant son remontage. Cette solution permet de mettre en oeuvre un algorithme de lecture de l'heure par reconnaissance des aiguilles, qui est fonctionnel, mais nécessite une programmation propre à chaque configuration d'afficheurs, notamment d'aiguilles, et de cadrans. La sensibilité aux paramètres de prise de vue est relativement élevée, et la fiabilité de la lecture peut être rendue difficile pour des montres dont au moins un cadran est très décoré, et/ou dont les afficheurs, notamment des aiguilles, peuvent se confondre avec le décor d'un tel cadran. Par exemple, une difficulté de lecture survient avec un cadran à motif rayonné, dont certains rayons peuvent ressembler fortement à une aiguille de seconde.

L'algorithme utilisé se base également sur le mouvement des aiguilles pour les distinguer du cadran. Cette méthode fonctionne relativement bien pour les aiguilles de seconde et de minute, toutefois l'aiguille des heures se déplace tellement lentement qu'il serait nécessaire d'attendre un temps très long pour obtenir une information exploitable. Quoique possible, la reconnaissance de l'aiguille des heures n'est de ce fait actuellement pas implémentée.

Un algorithme de reconnaissance universel peut constituer une solution, son développement nécessite toutefois la prise en compte d'une très grande variété de configurations d'affichage. Le document EP 3 211 491 A1 divulgue toutes les caractéristiques du préambule de la revendication 1.

### Résumé de l'invention

L'invention se propose d'améliorer la distinction par vision des aiguilles d'une montre par rapport au cadran. En particulier, l'invention met en oeuvre une détection des aiguilles par stéréoscopie.

A cet effet, l'invention concerne un dispositif de détermination de position d'un afficheur d'horlogerie selon la revendication 1.

L'invention concerne encore un remontoir automatique pour montre, comportant au moins un tel dispositif de détermination de la position d'un tel afficheur d'horlogerie.

L'invention concerne encore un appareil de réglage de marche et/ou d'état d'une montre, comportant un tel remontoir automatique, et/ou au moins un tel dispositif de détermination de la position d'un afficheur d'horlogerie.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, et en coupe, un remontoir automatique pour montre, comportant un dispositif de détermination de position d'afficheur selon l'invention ;
- la figure 2 représente, de façon schématisée, et en perspective, une montre avec son cadran qui constitue un repère fixe pour les afficheurs qui le surmontent, constitués par des aiguilles ;

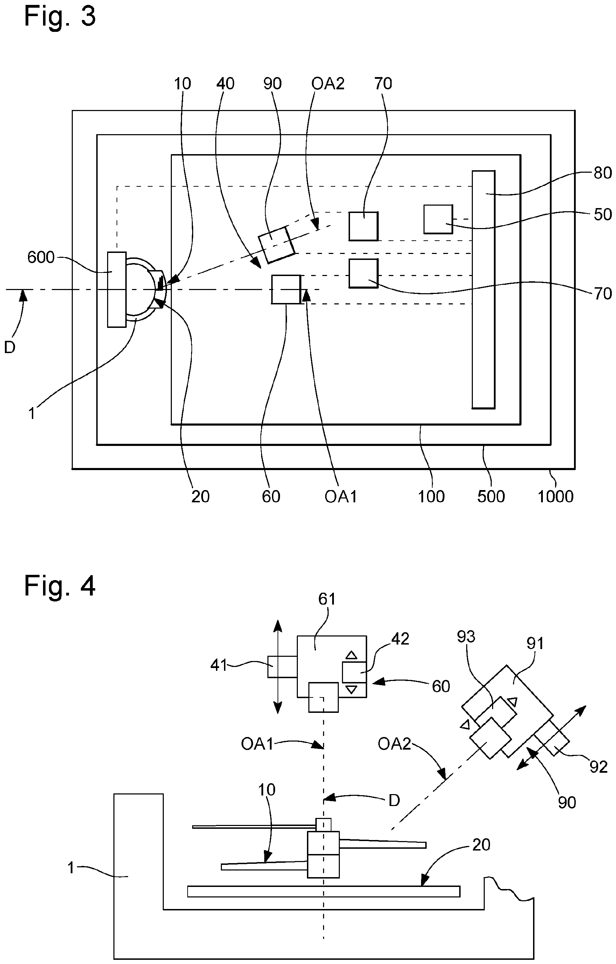

- la figure 3 est un schéma-bocs, qui représente un appareil de réglage de marche et/ou d'état d'une montre, comportant un remontoir automatique selon la figure 1, comportant lui-même un tel dispositif de détermination de la position d'afficheur ;
- la figure 4 est, en coupe, un détail de la figure 1.

### Description détaillée des modes de réalisation préférés

L'invention se propose d'améliorer la distinction par vision des afficheurs, et en particulier des aiguilles, d'une montre par rapport au cadran ou aux cadrans si la montre en comporte plusieurs.

La présente description expose plus particulièrement le cas non limitatif où ces afficheurs sont des aiguilles.

L'invention met en oeuvre des moyens pour augmenter la quantité d'informations disponibles, en particulier en ajoutant une information de profondeur. En effet, dans la quasi-totalité des cas, les aiguilles se trouvent au-dessus du cadran de la montre.

Il s'agit de distinguer les éléments les plus proches du système de vision, notamment une caméra ou similaire, de ceux qui en sont les plus éloignés, en particulier le cadran ou les cadrans. Cette information est injectée dans l'algorithme et permet ainsi d'améliorer très notablement les probabilités de détection.

Il existe de nombreuses méthodes différentes qui permettent théoriquement d'obtenir une information de profondeur, par exemple et non limitativement :
- l'utilisation de plusieurs appareils de prise de vue, notamment de plusieurs caméras, pour réaliser des prises de vue stéréoscopiques;
- la variation de la distance entre l'appareil de prise de vue, notamment une caméra, et la montre;
- la variation de la mise au point (focus) de l'appareil de prise de vue, notamment une caméra ;
- la variation de position d'une illumination qui permet de déplacer l'ombre projetée des aiguilles sur le cadran.

Ces différentes méthodes peuvent même se cumuler, toutefois au prix d'une plus grande complexité de traitement.

La méthode de variation de la distance, comme la méthode de la variation de la mise au point, nécessite une optique très coûteuse et encombrante, car celle-ci doit avoir une très faible profondeur de champ, et donc une grande ouverture et une longue focale.

De ce fait, le mode de réalisation préféré, en raison du coût modéré de l'appareillage nécessaire, est l'utilisation de la stéréoscopie, en ajoutant simplement un second appareil de prise de vue, notamment une caméra, hors axe de la montre ; un des appareils de prise de vue, notamment une caméra, reste de préférence dans l'axe, de manière à minimiser les effets de parallaxe lorsque les aiguilles auront été distinguées du cadran.

Une variante consiste à utiliser une illumination dont l'activation ou l'orientation peut être variée, permettant de déplacer l'ombre projetée par les aiguilles sur le cadran. Cette variante permet de n'avoir qu'un seul appareil de prise de vue tout en restant relativement simple. Le traitement optique de l'ombre permet d'identifier l'afficheur concerné, et de déterminer sa position sans ambiguïté.

La détection de l'aiguille des heures est donc grandement simplifiée, même si cette aiguille des heures semble immobile.

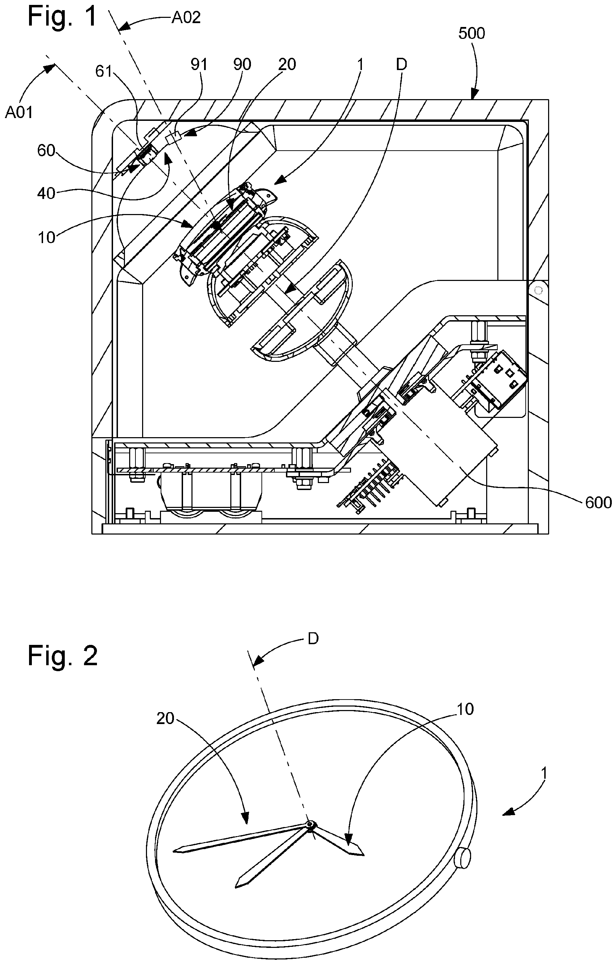

La figure 1 illustre une coupe d'un remontoir comportant ainsi deux caméras pour l'observation de l'affichage d'une montre.

Plus particulièrement, l'invention concerne ainsi un dispositif de détermination de la position d'un afficheur d'horlogerie 100, pour déterminer la position instantanée d'au moins un tel afficheur 10, en particulier une aiguille, d'une pièce d'horlogerie, en particulier d'une montre 1.

Ce dispositif 100 comporte des moyens de pilotage 80, qui sont agencés pour coordonner une base de temps de référence 50 et des moyens de reconnaissance de forme 70 et des moyens d'acquisition optique 60, que comporte ce dispositif 100, pour d'une part identifier un afficheur 10 particulier, en le distinguant des autres afficheurs de la pièce d'horlogerie, et d'autre part pour suivre sa course, pour coder sa position instantanée par rapport à un repère fixe 20 par rapport auquel cet afficheur 10 est mobile, et plus particulièrement mais non limitativement devant lequel cet afficheur 10 est mobile.

Ces moyens de pilotage 80 sont agencés pour commander des saisies de la position d'un afficheur 10 donné à des instants distincts, pour déterminer sa mobilité par rapport au repère fixe 20 qui est associé à cet afficheur. Ceci permet d'identifier un afficheur lent, comme une aiguille des heures, ou un indicateur de lune, ou de calendrier, ou similaire, par rapport aux éléments statiques de la pièce d'horlogerie, même si le contraste visuel permet mal de l'identifier à l'oeil nu.

Selon l'invention, ces moyens de pilotage 80 comportent des moyens de détermination de position en profondeur 40 pour la détermination en profondeur du plan PA de l'afficheur 10 par rapport au plan PR du repère fixe 20.

Ces moyens de détermination de position en profondeur 40 peuvent être agencés de différentes façons, selon différentes variantes qui peuvent être cumulées.

Dans une variante micrométrique, ces moyens de détermination de position en profondeur 40 comportent des moyens de commande de la position 41 des moyens d'acquisition optique 60 par rapport au repère fixe 20.

Dans une variante de focalisation, ces moyens de détermination de position en profondeur 40 comportent des moyens de commande de la focalisation 42 des moyens d'acquisition optique 60 par rapport à l'afficheur 10.

Dans une variante stéréoscopique, ces moyens de détermination de position en profondeur 40 comportent au moins des moyens complémentaires d'acquisition optique 90 qui sont couplés avec les moyens d'acquisition optique 60 pour suivre le même afficheur 10 et définir sa position dans l'espace par détermination interférentielle. On détermine ainsi la position exacte dans l'espace d'un afficheur 10 par détermination interférentielle des signaux transmis aux moyens de pilotage 80 par le moyen complémentaire d'acquisition optique 90 et le moyen d'acquisition optique 60.

Dans une variante cinématique, ces moyens de détermination de position en profondeur 40 comportent des moyens d'illumination d'au moins un afficheur 10, qui sont agencés pour projeter son ombre sur une surface fixe par rapport à laquelle ces moyens d'illumination ont une incidence variable et/ou une position variable, commandée par les moyens de pilotage 80 pour mouvoir l'ombre projetée qui est reconnue par les moyens de reconnaissance de forme 70 pour la détermination dudit afficheur 10 et de son mouvement. L'incidence variable peut être remplacée ou complétée par une mobilité, notamment plane ou linéaire ou circulaire, de sources d'illumination, apte à mouvoir l'ombre projetée.

De façon générale, cet au moins un afficheur 10 est mobile, pendant sa course, dans un plan d'afficheur PA par rapport à un repère fixe 20 comportant des moyens d'affichage de référence 30. Ces moyens d'affichage de référence 30 comportent au moins un index de repérage et/ou au moins une échelle de repérage.

Les moyens d'acquisition optique 60 sont ainsi couplés avec cette base de temps de référence 50, et de préférence sont aptes à suivre au moins un afficheur 10 sur la totalité de sa course, et plus particulièrement sont aptes à suivre chaque afficheur d'une même pièce d'horlogerie sur la totalité de sa course.

Les moyens de reconnaissance de forme 70, qui sont interfacés avec chacun des moyens d'acquisition optique 60, sont aptes à reconnaître et distinguer la forme de chaque afficheur 10.

Ainsi les moyens de pilotage 80, qui sont interfacés avec la base de temps 50 et avec chacun des moyens d'acquisition optique 60, et avec les moyens de reconnaissance de forme 70, sont agencés pour déterminer la position relative de chaque afficheur 10 par rapport au repère fixe 20 associé, à un instant repéré par rapport à la base de temps 50.

Plus particulièrement, chacun des moyens d'acquisition optique 60, comportant notamment mais non limitativement une première caméra 61, est agencé pour faire une saisie d'image sensiblement frontale par rapport au plan d'afficheur PA dans lequel est mobile l'afficheur 10 considéré.

On comprend qu'un même support matériel comme une caméra peut comporter à la fois les moyens de reconnaissance de forme 70 et les moyens d'acquisition optique 60.

Les moyens de détermination de position en profondeur 40 sont agencés pour déterminer la position en profondeur du plan d'afficheur PA par rapport à un plan de référence PR du repère fixe 20 auquel le plan d'afficheur PA est parallèle, perpendiculairement au plan de référence PR, de façon à assurer l'identification exacte d'un afficheur 10 particulier.

Plus particulièrement, les moyens de détermination de la position en profondeur 40 comportent au moins des moyens complémentaire d'acquisition optique 90, qui sont couplés avec des moyens d'acquisition optique 60 pour le suivi du même afficheur 10, et qui sont agencés pour faire une saisie d'image oblique ou transversale par rapport au plan d'afficheur PA dans lequel est mobile cet afficheur 10, pour déterminer la position en profondeur du plan d'afficheur PA par rapport à un plan de référence PR du repère fixe 20 auquel le plan d'afficheur PA est parallèle, perpendiculairement au plan de référence PR, pour la confirmation de l'identification correcte de l'afficheur 10, et pour l'amélioration de la saisie de sa position. Ces moyens complémentaire d'acquisition optique 90 peuvent en particulier comporter une deuxième caméra 91, et, si les moyens d'acquisition optique 60 comportent également une première caméra 61, les axes optiques OA1 et OA2 de ces deux caméras 61 et 91 ne sont pas confondus, et de préférence ne sont pas parallèles.

Naturellement, les moyens complémentaire d'acquisition optique 90 peuvent comporter des moyens de commande de leur position 92 et/ou des moyens de commande de leur focalisation 93, tout comme pour les moyens d'acquisition optique 60.

Plus particulièrement, ces moyens complémentaires d'acquisition optique 90 et les moyens d'acquisition optique 60 avec lesquels ils sont couplés pour le suivi du même afficheur 10 sont agencés pour une prise de vue stéréoscopique.

Ce dispositif 100 est notamment agencé pour déterminer la position instantanée, au même instant, de chaque afficheur 10 d'une même pièce d'horlogerie, en particulier d'une montre.

Plus particulièrement, cet au moins des moyens complémentaire d'acquisition optique 90 et le moyen d'acquisition optique 60 sont, en projection sur le plan de référence PR, disposés à distance l'un de l'autre.

Plus particulièrement, le moyen d'acquisition optique 60 comporte un axe optique OA1 qui est axé sur l'axe de rotation D de l'afficheur 10, quand l'afficheur 10 est un afficheur rotatif.

Plus particulièrement, quand l'afficheur 10 est un afficheur mobile par sauts périodiques, les moyens de pilotage 80 sont agencés pour commander les saisies de la position de l'afficheur 10 à des instants qui sont séparés par une durée supérieure à la période du saut.

Plus particulièrement, le moyen d'acquisition optique 60 est mobile par rapport au repère fixe 20, au moins en éloignement.

Plus particulièrement, le moyen d'acquisition optique 60 comporte au moins une caméra avec un dispositif d'auto-focalisation pour sa mise au point automatique.

L'invention concerne encore un remontoir automatique pour montre 500, comportant au moins un tel dispositif de détermination de la position d'un afficheur d'horlogerie 100. Ce remontoir 500 comporte classiquement des moyens de motorisation 600, agencés pour remuer la montre 1, par exemple et non limitativement autour de l'axe D qui est celui de l'affichage et aussi celui d'un automatique.

L'invention concerne encore un appareil de réglage de marche et/ou d'état d'une montre 1000, comportant un tel remontoir automatique 500, et/ou au moins un tel dispositif de détermination de la position d'un afficheur d'horlogerie 100. Cet appareil de réglage de marche et/ou d'état d'une montre 1000 est notamment réalisable selon les enseignements des documents EP3401235 (ajustement de marche) et EP3410236 (correction d'état) au nom de THE SWATCH GROUP RESEARCH & DEVELOPMENT Ltd.

## Revendications

1. Dispositif de détermination de position d'un afficheur d'horlogerie (100) pour déterminer la position instantanée d'au moins un afficheur (10) d'une pièce d'horlogerie, comportant des moyens de pilotage (80) coordonnant une base de temps (50) et des moyens de reconnaissance de forme (70) et des moyens d'acquisition optique (60), que comporte ledit dispositif (100), agencés pour identifier ledit au moins un afficheur (10) et suivre sa course pour coder sa position instantanée par rapport à un repère fixe (20), et commandant des saisies de sa position à des instants distincts pour déterminer sa mobilité par rapport audit repère fixe (20), **caractérisé en ce que** ledit dispositif (100) comporte des moyens de détermination de position en profondeur (40) pour déterminer la position en profondeur du plan (PA) dudit au moins un afficheur (10) par rapport au plan (PR) du repère fixe (20), et qui comportent des moyens de commande de la position (41) desdits moyens d'acquisition optique (60) par rapport audit repère fixe (20), et/ou des moyens de commande de la focalisation (42) desdits moyens d'acquisition optique (60) par rapport audit au moins un afficheur (10), et/ou au moins des moyens complémentaires d'acquisition optique (90) couplés avec lesdits moyens d'acquisition optique (60) pour suivre le même dit au moins un afficheur (10) et définir sa position dans l'espace par détermination interférentielle, et/ou des moyens d'illumination d'au moins un dit afficheur (10) qui sont agencés pour projeter son ombre sur une surface fixe par rapport à laquelle lesdits moyens d'illumination ont une incidence variable et/ou une position variable, commandée par lesdits moyens de pilotage (80) pour mouvoir l'ombre projetée qui est reconnue par lesdits moyens de reconnaissance de forme (70) pour la détermination dudit afficheur (10) et de son mouvement.

2. Dispositif (100) selon la revendication 1, **caractérisé en ce que** ledit au moins un afficheur (10) est mobile pendant sa course dans un plan d'afficheur (PA) par rapport audit repère fixe (20) comportant des moyens d'affichage de référence (30) comportant au moins un index de repérage et/ou au moins une échelle de repérage, **en ce que** lesdits moyens de reconnaissance de forme (70) interfacés avec chacun desdits moyens d'acquisition optique (60) sont aptes à reconnaître et distinguer la forme de chaque dit afficheur (10), **en ce que** lesdits moyens de pilotage (80) sont interfacés avec ladite base de temps (50) et avec chacun desdits moyens d'acquisition optique (60) et avec lesdits moyens de reconnaissance de forme (70) et qui sont agencés pour déterminer la position relative de chaque dit afficheur (10) par rapport au dit repère fixe (20) associé à un instant repéré par rapport à ladite base de temps (50), **caractérisé en ce que** lesdits moyens de pilotage (80) sont agencés pour commander, à des instants distincts, des saisies de la position d'au moins un dit afficheur (10) pour comparer ses positions auxdits instants et déterminer sa mobilité par rapport à son dit repère fixe (20) associé, et encore **caractérisé en ce que** chacun desdits moyens d'acquisition optique (60) est agencé pour faire une saisie d'image sensiblement frontale par rapport audit plan d'afficheur (PA) dans lequel est mobile ledit afficheur (10), et **en ce que**, pour assurer l'identification exacte d'au moins un dit afficheur (10), ledit dispositif (100) comporte lesdits moyens de détermination de la position en profondeur (40) dudit plan d'afficheur (PA) par rapport audit plan de référence (PR) dudit repère fixe (20) auquel ledit plan d'afficheur (PA) est parallèle, perpendiculairement audit plan de référence (PR), et **en ce que** lesdits moyens de détermination de la position en profondeur (40) comportent lesdits moyens de commande de la position (41) dudit moyen d'acquisition optique (60) par rapport audit plan de référence (PR) et/ou lesdits moyens de commande de la focalisation (42) dudit moyen d'acquisition optique (60) par rapport audit afficheur (10) et/ou au moins lesdits moyens complémentaire d'acquisition optique (90) couplé avec un dit moyen d'acquisition optique (60) pour le suivi du même dit afficheur (10) et déterminer sa position exacte dans l'espace par détermination interférentielle des signaux transmis auxdits moyens de pilotage (80) par ledit moyen complémentaire d'acquisition optique (90) et ledit moyen d'acquisition optique (60).

3. Dispositif (100) selon la revendication 1 ou 2, **caractérisé en ce que** lesdits moyens de détermination de la position en profondeur (40) comportent au moins un dit moyen complémentaire d'acquisition optique (90) couplé avec un dit moyen d'acquisition optique (60) pour le suivi du même dit afficheur (10) et qui est agencé pour faire une saisie d'image oblique ou transversale par rapport audit plan d'afficheur (PA) dans lequel est mobile ledit afficheur (10), pour déterminer la position en profondeur dudit plan d'afficheur (PA) par rapport à un plan de référence (PR) dudit repère fixe (20) auquel ledit plan d'afficheur (PA) est parallèle, perpendiculairement audit plan de référence (PR), pour la confirmation de l'identification correcte dudit afficheur et pour l'amélioration de la saisie de sa position.

4. Dispositif (100) selon la revendication 3, **caractérisé en ce que** ledit au moins des moyens complémentaire d'acquisition optique (90) et ledit moyen d'acquisition optique (60) avec lequel il est couplé pour le suivi du même dit afficheur (10) sont agencés pour une prise de vue stéréoscopique.

5. Dispositif (100) selon la revendication 3 ou 4, **caractérisé en ce que** ledit au moins des moyens complémentaire d'acquisition optique (90) et ledit moyen d'acquisition optique (60) sont, en projection sur ledit plan de référence (PR), disposés à distance l'un de l'autre.

6. Dispositif (100) selon l'une des revendications 1 à 5, **caractérisé en ce que** ledit moyen d'acquisition optique (60) est axé sur l'axe de rotation dudit afficheur (10) quand ledit afficheur (10) est un afficheur rotatif.

7. Dispositif (100) selon l'une des revendications 1 à 6, **caractérisé en ce que**, quand ledit afficheur (10) est un afficheur mobile par sauts périodiques, lesdits moyens de pilotage (80) sont agencés pour commander lesdits saisies de la position dudit afficheur (10) à des instants qui sont séparés par une durée supérieure à la période dudit saut.

8. Dispositif (100) selon l'une des revendications 1 à 7, **caractérisé en ce que** ledit moyen d'acquisition optique (60) est mobile par rapport audit repère fixe (20), au moins en éloignement.

9. Dispositif (100) selon l'une des revendications 1 à 8, **caractérisé en ce que** ledit moyen d'acquisition optique (60) comporte au moins une caméra avec un dispositif d'auto-focalisation pour sa mise au point automatique.

10. Dispositif (100) selon l'une des revendications 1 à 9, **caractérisé en ce que** ledit dispositif (100) est agencé pour déterminer la position instantanée, au même instant, de chaque dit afficheur (10) d'une même pièce d'horlogerie.

11. Remontoir automatique pour montre (500), comportant au moins un dispositif de détermination de la position d'un afficheur d'horlogerie (100) selon l'une des revendications 1 à 10.

12. Appareil de réglage de marche et/ou d'état d'une montre (1000), comportant un tel remontoir automatique selon la revendication 11, et/ou au moins un dispositif de détermination de la position d'un afficheur d'horlogerie (100) selon l'une des revendications 1 à 10.

## Patentansprüche

1. Vorrichtung (100) zur Positionsbestimmung einer Uhranzeige, um die momentane Position mindestens eines Zeigers (10) einer Uhr zu bestimmen, mit Steuermitteln (80), die eine Zeitbasis (50) koordinieren, und Mitteln zur Formerkennung (70) und optischen Erfassungsmittel (60), die die Vorrichtung (100) umfasst und die dafür ausgelegt sind, mindestens einen Zeiger (10) zu identifizieren und seinen Lauf zu verfolgen, um seine momentane Position in Bezug auf eine feste Markierung (20) zu codieren, und die Erfassung seiner Position zu verschiedenen Zeitpunkten zu steuern, um seine Mobilität in Bezug auf die feste Markierung (20) zu bestimmen, **dadurch gekennzeichnet, dass** die Vorrichtung (100) Folgendes umfasst: Mittel (40) zur Bestimmung der Tiefenposition, um die Tiefenposition der Ebene (PA) des mindestens einen Zeigers (10) in Bezug auf die Ebene (PR) der festen Markierung (20) zu bestimmen, und Mittel (41) zur Steuerung der Position der optischen Erfassungsmittel (60) in Bezug auf die feste Markierung (20) und/oder Mittel (42) zur Steuerung der Fokussierung der optischen Erfassungsmittel (60) in Bezug auf den mindestens einen Zeiger (10) und/oder mindestens komplementäre optische Erfassungsmittel (90), die mit den optischen Erfassungsmitteln (60) gekoppelt sind, um den mindestens einen Zeiger (10) zu verfolgen und um seine Position im Raum durch Interferenzbestimmung zu definieren, und/oder Mittel zur Beleuchtung mindestens eines Zeigers (10), die dafür ausgelegt sind, seinen Schatten auf eine feste Oberfläche zu projizieren, in Bezug auf die die Beleuchtungsmittel einen variablen Einfall und/oder eine variable Position haben, die durch die Steuermittel (80) gesteuert werden, um den projizierten Schatten, der durch die Formerkennungsmittel (70) für die Bestimmung des Anzeigers (10) und seiner Bewegung erkannt wird, zu bewegen.

2. Vorrichtung (100) nach Anspruch 1, **dadurch gekennzeichnet, dass** der mindestens eine Zeiger (10) während seines Laufs in einer Anzeigeebene (PA) in Bezug auf die feste Markierung (20) beweglich ist und Referenzanzeigemittel (30) enthält, die mindestens einen Bezugsindex und/oder mindestens eine Bezugsskala enthalten, dass die Formerkennungsmittel (70), die mit jedem der optischen Erfassungsmittel (60) eine Schnittstelle bilden, die Form jedes Anzeigers (10) erkennen und unterscheiden können, dass die Steuerungsmittel (80) mit der Zeitbasis (50) und mit jedem der optischen Erfassungsmittel (60) und mit den Formerkennungsmitteln (70) eine Schnittstelle bilden und dafür ausgelegt sind, die relative Position jedes Zeigers (10) in Bezug auf die feste Markierung (20), die einem in Bezug auf die Zeitbasis (50) festgelegten Zeitpunkt zugeordnet ist, zu bestimmen, **dadurch gekennzeichnet, dass** die Steuerungsmittel (80) dafür ausgelegt sind, zu verschieden Zeitpunkten die Erfassung der Position mindestens eines Zeigers (10) zu steuern, um seine Positionen zu den Zeitpunkten zu vergleichen und um seine Beweglichkeit in Bezug auf die zugeordnete feste Markierung (20) zu bestimmen, und außerdem **dadurch gekennzeichnet, dass** jedes der optischen Erfassungsmittel (60) dafür ausgelegt ist, eine Eingabe eines im Wesentlichen frontalen Bildes in Bezug auf die Anzeigeebene (PA), in der der Zeiger (10) beweglich ist, vorzunehmen, und dass die Vorrichtung (100) für die Sicherstellung der exakten Identifizierung mindestens eines Zeigers (10) die Mittel (40) zum Bestimmen der Tiefenposition in Bezug auf die Referenzebene (PR) des festen Bezugssystems (20), zu der die Anzeigeebene (PA) parallel ist, senkrecht zu der Referenzebene (PR) enthält, und dass die Mittel (40) zum Bestimmen der Tiefenposition umfassen: die Mittel (41) zum Steuern der Position der optischen Erfassungsmittel (60) in Bezug auf die Referenzebene (PR) und/oder die Mittel (42) zum Steuern der Fokussierung der optischen Erfassungsmittel (60) in Bezug auf den Anzeiger (10) und/oder wenigstens die komplementären optischen Erfassungsmittel (90), die mit den optischen Erfassungsmitteln (60) gekoppelt sind, um demselben Anzeiger (10) zu folgen und um seine exakte Position im Raum durch Interferenzbestimmung von durch die komplementären optischen Erfassungsmittel (90) und die optischen Erfassungsmittel (60) an die Steuerungsmittel (80) gesendeten Signalen zu bestimmen.

3. Vorrichtung (100) nach Anspruch 1 oder 2, **dadurch gekennzeichnet, dass** die Mittel (40) zum Bestimmen der Tiefenposition mindestens ein komplementäres optisches Erfassungsmittel (90) umfassen, das mit einem optischen Erfassungsmittel (60) gekoppelt ist, um demselben Zeiger (10) zu verfolgen, und das dafür ausgelegt ist, eine Eingabe eines schrägen oder transversalen Bildes in Bezug auf die Anzeigerebene (PA), in der der Anzeiger (10) beweglich ist, vorzunehmen, um die Tiefenposition der Anzeigeebene (PA) in Bezug auf eine Referenzebene (PR) des festen Markierung (20), zu der die Anzeigerebene (PA) parallel ist, senkrecht zur Referenzebene (PR) zu bestimmen, um die korrekte Identifizierung des Anzeigers zu bestätigen und um die Eingabe seiner Position zu verbessern.

4. Vorrichtung (100) nach Anspruch 3, **dadurch gekennzeichnet, dass** das mindestens eine komplementäre optische Erfassungsmittel (90) und das optische Erfassungsmittel (60), mit dem es gekoppelt ist, um demselben Zeiger (10) zu folgen, für die Aufnahme einer stereoskopischen Ansicht ausgelegt sind.

5. Vorrichtung (100) nach Anspruch 3 oder 4, **dadurch gekennzeichnet, dass** das mindestens eine komplementäre optische Erfassungsmittel (90) und das optische Erfassungsmittel (60) in der Projektion auf die Referenzebene (PR) in einem Abstand voneinander angeordnet sind.

6. Vorrichtung (100) nach einem der Ansprüche 1 bis 5, **dadurch gekennzeichnet, dass** die optischen Erfassungsmittel (60) auf der Drehachse des Zeigers (10) liegt, wenn der Zeiger (10) ein drehender Anzeiger ist.

7. Vorrichtung (100) nach einem der Ansprüche 1 bis 6, **dadurch gekennzeichnet, dass** die Steuerungsmittel (80) dann, wenn der Zeiger (10) ein durch periodische Sprünge beweglicher Zeiger ist, dafür ausgelegt sind, die Eingaben der Position der Zeiger (10) zu Zeitpunkten, die durch eine Dauer getrennt sind, die größer als die Sprungperiode ist, zu steuern.

8. Vorrichtung (100) nach einem der Ansprüche 1 bis 7, **dadurch gekennzeichnet, dass** die optischen Erfassungsmittel (60) in Bezug auf die feste Markierung (20) zumindest in Abstandsrichtung beweglich ist.

9. Vorrichtung (100) nach einem der Ansprüche 1 bis 8, **dadurch gekennzeichnet, dass** das optische Erfassungsmittel (60) mindestens eine Kamera mit einer Autofokussierungsvorrichtung für ihre automatische Fokussierung umfasst.

10. Vorrichtung (100) nach einem der Ansprüche 1 bis 9, **dadurch gekennzeichnet, dass** die Vorrichtung (100) dafür ausgelegt ist, die momentane Position jedes Zeigers (10) derselben Uhr zum selben Zeitpunkt zu bestimmen.

11. Automatischer Aufzug (500) für Uhren, der mindestens eine Vorrichtung (100) zur Bestimmung der Position eines Uhrenanzeigers nach einem der Ansprüche 1 bis 10 umfasst.

12. Apparat zum Regulieren des Gangs und/oder des Zustands einer Uhr (1000), die einen solchen automatischen Aufzug nach Anspruch 11 und/oder mindestens eine Vorrichtung (100) zum Bestimmen der Position eines Uhranzeigers nach einem der Ansprüche 1 bis 10 umfasst.

## Claims

1. Device for determining the position of a horological display (100) for determining the instantaneous position of at least one display (10) of a timepiece, including control means (80) coordinating a time base (50) and shape recognition means (70) and optical acquisition means (60), that said device (100) includes, arranged to identify said at least one display (10) and monitor its travel in order to code its instantaneous position in relation to a fixed guide-mark (20), and controlling entries of its position at distinct instants in order to determine its mobility in relation to said fixed guide-mark (20), **characterised in that** said device (100) includes depth position determination means (40) to determine the depth position of the plane (PA) of said at least one display (10) in relation to the plane (PR) of the fixed guide-mark (20), and that includes means for controlling the position (41) of said optical acquisition means (60) in relation to said fixed guide-mark (20), and/or means for controlling the focus (42) of said optical acquisition means (60) in relation to said at least one display (10), and/or at least additional optical acquisition means (90) coupled with said optical acquisition means (60) in order to monitor the same said at least one display (10) and define its position in space by interferential determination, and/or means for illuminating at least one said display (10) that are arranged to project its shadow on a fixed surface in relation to which said illumination means have a variable incidence and/or a variable position, controlled by said control means (80) to move the projected shadow that is recognised by said shape recognition means (70) for the determination of said display (10) and of its movement.

2. Device (100) according to claim 1, **characterised in that** said at least one display (10) is moveable during its travel in a display plane (PA) in relation to said fixed guide-mark (20) including reference display means (30) including at least one location index and/or at least one location scale, **in that** said shape recognition means (70) interfaced with each of said optical acquisition means (60) are capable of recognising and distinguishing the shape of each said display (10), **in that** said control means (80) are interfaced with said time base (50) and with each of said optical acquisition means (60) and with said shape recognition means (70) and that are arranged to determine the relative position of each said display (10) in relation to the said fixed guide-mark (20) associated with an instant identified in relation to said time base (50), **characterised in that** said control means (80) are arranged to control, at distinct instants, entries of the position of at least one said display (10) in order to compare its positions with said instants and in order to determine its mobility in relation to its associated fixed guide-mark (20), and also **characterised in that** each of said optical acquisition means (60) is arranged to carry out a substantially frontal image entry in relation to said display plane (PA) wherein said display (10) is moveable, and **in that**, in order to ensure the exact identification of at least one said display (10), said device (100) includes said means for determining the depth position (40) of said display plane (PA) in relation to said reference plane (PR) of said fixed guide-mark (20) with which said display plane (PA) is parallel, perpendicular to said reference plane (PR), and **in that** said means for determining the depth position (40) include said means for controlling the position (41) of said optical acquisition means (60) in relation to said reference plane (PR) and/or said means for controlling the focus (42) of said optical acquisition means (60) in relation to said display (10) and/or at least said additional optical acquisition means (90) coupled with said optical acquisition means (60) for the monitoring of the same said display (10) and to determine its exact position in space by interferential determination of the signals transmitted to said control means (80) by said additional optical acquisition means (90) and said optical acquisition means (60).

3. Device (100) according to claim 1 or 2, **characterised in that** said means for determining the depth position (40) include at least one said additional optical acquisition means (90) coupled with said optical acquisition means (60) for the monitoring of the same display (10) and which is arranged to carry out an oblique or transverse image entry in relation to the display plane (PA) wherein said display (10) is moveable, to determine the depth position of the display plane (PA) in relation to a reference plane (PR) of said fixed guide-mark (20) with which said display plane (PA) is parallel, perpendicular to said reference plane (PR), for the confirmation of the correct identification of said display and for the improvement of the entry of its position.

4. Device (100) according to claim 3, **characterised in that** said at least additional optical acquisition means (90) and said optical acquisition means (60) with which it is coupled for the monitoring of the same said display (10) are arranged for a stereoscopic shot.

5. Device (100) according to claim 3 or 4, **characterised in that** said at least additional optical acquisition means (90) and said optical acquisition means (60) are, in projection over said reference plane (PR), disposed at a distance from one another.

6. Device (100) according to one of claims 1 to 5, **characterised in that** said optical acquisition means (60) is centred on the axis of rotation of said display (10) when said display (10) is a rotary display.

7. Device (100) according to one of claims 1 to 6, **characterised in that**, when said display (10) is a display moveable by periodic jumps, said control means (80) are arranged to control said entries of the position of said display (10) at instants that are separated by a duration greater than the period of said jump.

8. Device (100) according to one of claims 1 to 7, **characterised in that** said optical acquisition means (60) is moveable in relation to said fixed guide-mark (20), at least in distance.

9. Device (100) according to one of claims 1 to 8, **characterised in that** said optical acquisition means (60) includes at least one camera with an auto-focus device for its automatic focusing.

10. Device (100) according to one of claims 1 to 9, **characterised in that** said device (100) is arranged to determine the instantaneous position, at the same instant, of each said display (10) of the same timepiece.

11. Automatic winding-mechanism for watch (500), including at least one device for determining the position of a horological display (100) according to one of claims 1 to 10.

12. Device for adjusting the rate and/or state of a watch (1000), including such an automatic winding-mechanism according to claim 11, and/or at least one device for determining the position of a horological display (100) according to one of claims 1 to 10.
